# FASCICULE DE BREVET EUROPEEN

(11) **EP 0 415 317 B1**
(45) Date de publication et mention de la délivrance du brevet: **10.11.1993**
(21) Numéro de dépôt: 90116378.2
(22) Date de dépôt: 27.08.1990
(51) Int. Cl.: F04B 37/14, F04B 49/10, F04C 29/10

(54) **Dispositif de sécurité anti-retour**
Rückschlagsicherheitsvorrichtung
No-return security apparatus

(30) Priorité: 01.09.1989 FR 8911486
(43) Date de publication de la demande: 06.03.1991
(73) Titulaire: ALCATEL CIT, 75008 Paris (FR)
(72) Inventeur: Mathieu, Luc, F-74000 Annecy (FR); Paquet, Jean-Marc, F-74000 Annecy Le Vieux (FR)
(74) Mandataire: Weinmiller, Jürgen

(56) Documents cités:
- FR-A- 1 595 857
- FR-A- 2 458 013
- US-A- 2 124 390

## Description

La présente invention concerne un dispositif de sécurité anti-retour pour une installation comportant une enceinte à vide reliée à une pompe à vide à joint d'huile, comprenant une vanne reliée entre l'enceinte et l'aspiration de ladite pompe, et commandée électromagnétiquement par une bobine elle-même commandée par un relais actionné par la mise sous tension du moteur d'entraînement de ladite pompe, et désactivé par la mise hors tension dudit moteur. Le document US-A-2 124 390 décrit un dispositif de ce type dans lequel la vanne met la pompe à vide en communication soit avec la chambre à vide lorsque la pompe est alimentée, soit avec l'atmosphère lorsque l'alimentation est coupée. L'intérieur du corps de vanne en communication avec la chambre à vide, comporte un soufflet étanche assurant l'isolation de la chambre à vide lorsque la vanne est dans sa position assurant la liaison entre l'atmosphère et la pompe à vide.

L'invention propose un dispositif plus simple qui est caractérisé en ce que ladite vanne est constituée d'un tube rigide à l'intérieur duquel est situé un tube souple dont les deux extrémités sont solidarisées d'une manière étanche aux extrémités du tube rigide, un orifice de commande étant aménagé dans la paroi du tube rigide au voisinage de sa région médiane, et en ce qu'un distributeur à deux voies de communication, permettant la liaison entre une sortie commune c et l'une ou l'autre de deux entrées distinctes a ou b, a sa sortie commune c reliée audit orifice de commande de ladite vanne, son entrée a à l'aspiration de ladite pompe et son entrée b ouverte à la pression atmosphérique, ledit distributeur étant commandé électromagnétiquement par ladite bobine, le distributeur assurant la communication de la sortie commune c vers l'entrée a lorsque ledit bobinage est alimenté et vers l'entrée b, à l'atmosphère, lorsque ledit bobinage n'est pas alimenté.

Avantageusement, un noyau est disposé à l'intérieur du tube souple de ladite vanne, de section inférieure à la section interne du tube à l'état de repos. Cette disposition permet une meilleure obstruction du tube souple sur le noyau que sur lui-même ; il est en effet difficile, en l'absence de noyau, d'obtenir l'obstruction totale du passage.

L'invention va maintenant être décrite en se référant au dessin annexé dans lequel :
La figure 1 représente une installation de pompage munie d'un dispositif de sécurité anti-retour selon l'invention,
La figure 2 est une vue montrant la vanne utilisée dans le dispositif de la figure 1,
La figure 3 est une variante de la vanne représentée figure 2 et utilisée dans le dispositif de la figure 1.

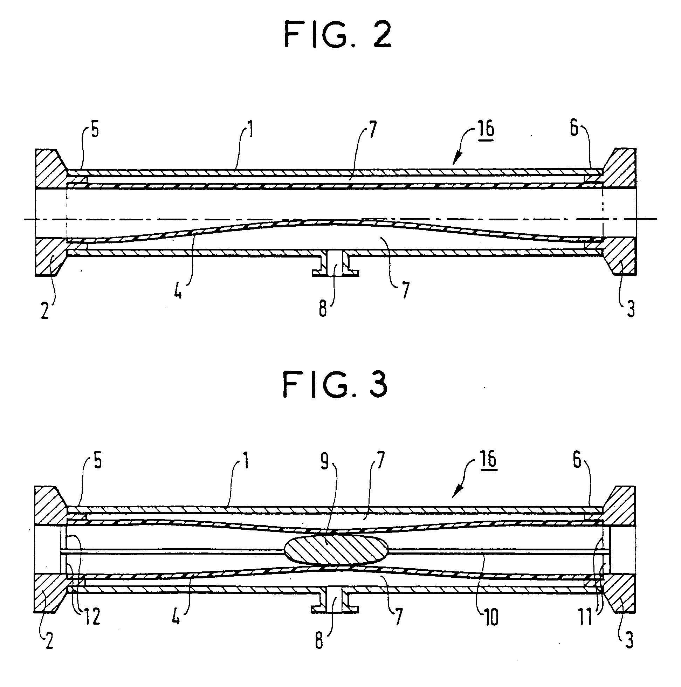

Avant de décrire le dispositif de sécurité anti-retour, on va décrire, en se référant à la figure 2, une vanne 16 utilisée dans ce dispositif.

Ainsi, en se reportant à la figure 2, la vanne 16 comprend un tube rigide 1 muni de deux embouts de raccordement 2 et 3. A l'intérieur du tube rigide est situé un tube souple 4 dont les deux extrémités 5 et 6 sont solidarisées d'une manière étanche aux extrémités du tube rigide 1. La partie centrale du tube souple 4 est libre de telle sorte qu'un espace libre 7 existe entre le tube rigide et le tube souple. Un orifice de commande 8 est aménagé dans la paroi du tube rigide au voisinage de sa région médiane. La mise en pression de l'espace libre 7, à une pression supérieure à celle qui règne à l'intérieur du tube souple 4, par cet orifice 8, permet ainsi de commander la fermeture de la vanne par constriction du tube souple. Lorsque la pression dans l'espace libre 7 est égale ou inférieure à la pression dans le tube souple, son élasticité maintient le tube souple ouvert.

Une telle vanne est à passage direct et donc à conductance maximale.

Dans la variante représentée sur la figure 3, un noyau 9 est disposé à l'intérieur du tube souple 4. De cette façon, lors de la fermeture de la vanne, le tube souple 4 ne se resserre pas sur lui-même mais contre le noyau, ce qui permet plus facilement d'obtenir l'obturation complète.

Dans le cas de la figure 3, le noyau 9 est maintenu par un axe lui-même fixé aux extrémités 2 et 3 par exemple par l'intermédiaire de rayons tels que 11,12.

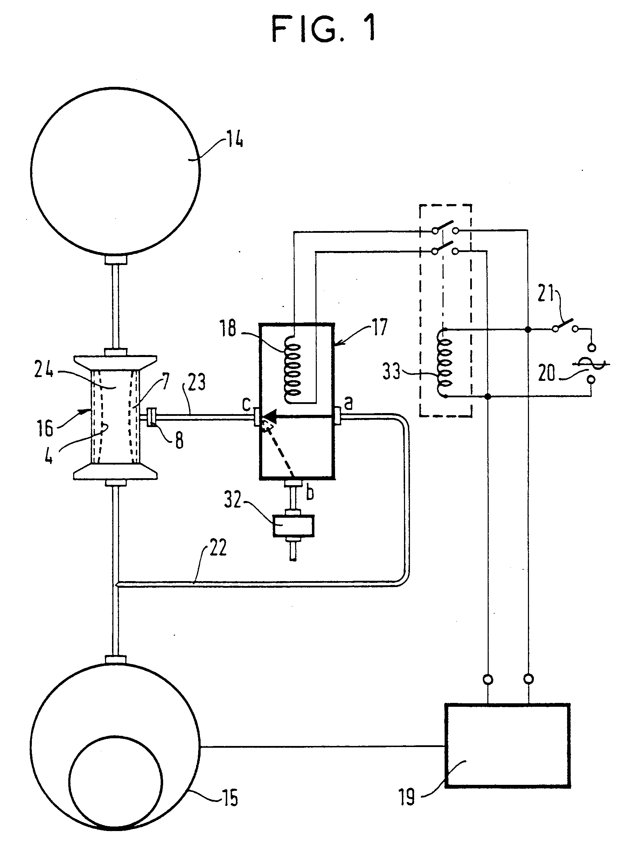

En se référant maintenant à la figure 1, on va décrire le dispositif de sécurité anti-retour de l'invention.

Sur cette figure, on a une enceinte à vide 14 reliée à une pompe à vide à joint d'huile 15.

On sait que dans une telle installation, il faut éviter soigneusement la pollution de l'enceinte par des remontées d'huile en provenance de la pompe, notamment en cas de coupure de courant.

Un dispositif connu utilise une vanne d'équerre à cloche qui se ferme lors d'une coupure mais une telle solution a l'inconvénient d'une conductance réduite et de ne pouvoir être utilisée que dans certaines gammes de pression.

Selon l'invention, on utilise une vanne telle que celle de la figure 2 ou même de la figure 3 avec un noyau de faible section. Ainsi, une telle vanne schématisée en 16 est reliée entre l'enceinte 14 et l'aspiration de la pompe 15.

La commande de la vanne 16 est effectuée par son orifice de commande 8 relié, par une conduite 23, à la sortie C d'un électrodistributeur 17 qui comprend une sortie commune c et deux entrées a et b et pouvant assurer soit la communication a-c, soit la communication b-c. La commande est électromagnétique avec retour par ressort de rappel.

La commande électromagnétique assure la communication a-c telle que représentée en trait continu fort tandis que le rappel par ressort, en l'absence d'alimentation de la bobine 18 assure la communication figurée en pointillé : b-c.

L'entrée a est reliée à l'aspiration de la pompe 15 par une conduite 22 tandis que l'entrée b est reliée par l'intermédiaire d'un filtre 32 à l'atmosphère ou à une arrivée de gaz ( neutre par exemple) à une pression d'autant plus forte que l'on désire une fermeture rapide de la vanne 16. En 19, on a figuré le moteur d'entraînement de la pompe 15, alimenté électriquement par une alimentation électrique en 20. Un interrupteur 21 est disposé dans le circuit électrique qui alimente le moteur 19 et un relais 33 qui commande l'alimentation de la bobine 18 de l'électrodistributeur 17.

Le fonctionnement est le suivant : lorsque l'interrupteur 21 est fermé, la pompe 15 fonctionne et la bobine 18 étant alimentée par le relais 33, le distributeur 17 assure la communication a-c. Ainsi, la pression dans l'espace libre 7 de la vanne 16 est à la pression d'aspiration de la pompe 15 par l'intermédiaire de la canalisation 22 et la vanne 16 reste donc ouverte.

Lors d'une éventuelle coupure de courant arrêtant la pompe 15, la bobine 18, cesse d'être alimentée par le relais 33 et le ressort de rappel, non représenté, du distributeur 17 provoque la communication b-c. L'espace 7 est alors soumis à la pression alors que l'intérieur 24 de la vanne 16 est à une basse pression le tube souple 4 se comprime donc, soit sur lui-même en l'absence de noyau, soit sur le noyau s'il s'agit d'une vanne à noyau comme sur la figure 3. On assure ainsi automatiquement l'obturation de la communication entre la pompe 15 et l'enceinte 14 en cas de coupure du courant et on évite ainsi toute possibilité de remontée d'huile.

## Revendications

1. Dispositif de sécurité anti-retour pour une installation comportant une enceinte à vide (14) reliée à une pompe à vide à joint d'huile (15), comprenant une vanne (16) reliée entre l'enceinte (14) et l'aspiration de ladite pompe, et commandée électromagnétiquement par une bobine (18) elle-même commandée par un relais (33) actionné par la mise sous tension du moteur d'entraînement (19) de ladite pompe, et désactivé par la mise hors tension dudit moteur, caractérisé en ce que ladite vanne est constituée d'un tube rigide (1) à l'intérieur duquel est situé un tube souple (4) dont les deux extrémités (5, 6) sont solidarisées d'une manière étanche aux extrémités du tube rigide, un orifice de commande (8) étant aménagé dans la paroi du tube rigide au voisinage de sa région médiane, et en ce qu'un distributeur (17) à deux voies de communication, permettant la liaison entre une sortie commune c et l'une ou l'autre de deux entrées distinctes a ou b, a sa sortie commune c reliée audit orifice de commande (8) de ladite vanne, son entrée a à l'aspiration de ladite pompe (15) et son entrée b ouverte à la pression atmosphérique, ledit distributeur (17) étant commandé électromagnétiquement par ladite bobine(18), le distributeur assurant la communication de la sortie commune c vers l'entrée a lorsque ledit bobinage (18) est alimenté et vers l'entrée b, à l'atmosphère, lorsque ledit bobinage n'est pas alimenté.

2. Dispositif selon la revendication 1, caractérisé en ce qu'un noyau (9) est disposé à l'intérieur du tube souple de ladite vanne (16), de section inférieure à la section interne du tube à l'état de repos.

## Patentansprüche

1. Rückschlagsicherheitsvorrichtung für eine Anlage bestehend aus einem Vakuumgefäß (14), das an eine Vakuumpumpe (15) mit Öldichtung angeschlossen ist, wobei die Vorrichtung ein Ventil (16) aufweist, das zwischen dem Gefäß (14) und dem Ansaugende der Pumpe angeschlossen und elektromagnetisch durch eine Spule (18) betätigt wird, die ihrerseits von einem Relais (33) gesteuert wird, das durch Einschalten des Antriebsmotors (19) der Pumpe betätigt wird und durch Abschalten des Motors abfällt, dadurch gekennzeichnet, daß das Ventil aus einem starren Rohr (1) besteht, in dessen Innerem ein flexibles Rohr (4) angebracht ist, dessen beide Enden (5, 6) dicht an den beiden Enden des starren Rohres befestigt sind, wobei eine Steueröffnung (8) in die Wand des starren Rohres in der Nähe seines mittleren Abschnittes eingearbeitet ist, und daß ein Verteiler (17) mit zwei Verbindungskanälen, der die Verbindung zwischen einem gemeinsamen Auslaß (c) und dem einen oder dem anderen der beiden unterschiedlichen Einlässe (a oder b) ermöglicht, mit seinem gemeinsamen Auslaß (c) an die Steueröffnung (8) des Ventils, mit seinem Einlaß a an das Ansaugende der Pumpe (15) und mit seinem offenen Einlaß b an den Atmosphärendruck angeschlossen ist, wobei der Verteiler (17) durch die Spule (18) elektromagnetisch gesteuert wird, und daß der Verteiler die Verbindung des gemeinsamen Auslasses (c) zum Einlaß a, wenn die Spule (18) gespeist ist, und zum Einlaß b, also zur Atmosphäre herstellt, wenn die Spule nicht gespeist ist.

2. Vorrichtung nach Anspruch 1, dadurch gekennzeichnet, daß ein Kern (9) im Inneren des flexiblen Rohres des Ventils (16) angeordnet ist und einen Querschnitt besitzt, der kleiner als der innere Querschnitt des Rohres im Ruhezustand ist.

## Claims

1. An anti-return safety device for an installation comprising a vacuum vessel (14) connected to a vacuum pump (15) having an oil seal, including a valve (16) connected between the vessel (14) and the suction inlet of said pump and being electromagnetically controlled by a coil (18), itself controlled by a relay (33) which is actuated when the drive motor (19) of said pump is switched on, and which is deactivated when said motor is switched off, the device being characterized in that said valve (16) is constituted by a rigid tube (1) having a flexible tube (4) situated therein whose two ends (5, 6) are fixed in sealed manner to the ends of the rigid tube, a control orifice (8) being provided through the wall of the rigid tube in the vicinity of the middle thereof; and in that a distributor (17) having two communication paths allowing to establish the connection between a common outlet c and the one or the other of two distinct inlets a, and b, has its common outlet c connected to said control orifice (8) of said valve, its inlet a connected to the suction inlet of said pump (15), and its inlet b open to atmospheric pressure, said distributor (17) being electromagnetically controlled by said coil (18), with the distributor ensuring the communication of the common outlet c towards the inlet a when said coil (18) is powered, and towards the inlet b connected to the atmosphere when said coil is not powered.

2. A device according to claim 1, characterized in that a core (9) is disposed inside the flexible tube of said valve (16), with the section of said core being smaller than the internal section of the tube when the tube is in the rest position.
